# EUROPÄISCHE PATENTSCHRIFT

(11) **EP 3 500 456 B1**
(45) Veröffentlichungstag und Bekanntmachung des Hinweises auf die Patenterteilung: **17.06.2020**
(21) Anmeldenummer: 17735457.8
(22) Anmeldetag: 28.06.2017
(51) Int. Cl.: B60S 1/64

(54) **VERFAHREN UND VORRICHTUNG ZUM REINIGEN EINES INNENRAUMS EINES KRAFTFAHRZEUGS**
METHOD AND APPARATUS FOR CLEANING AN INTERIOR OF A MOTOR VEHICLE
PROCÉDÉ ET DISPOSITIF POUR NETTOYER L'HABITACLE D'UN VÉHICULE AUTOMOBILE

(30) Priorität: 18.08.2016 DE 102016215525
(43) Veröffentlichungstag der Anmeldung: 26.06.2019
(73) Patentinhaber: Volkswagen Aktiengesellschaft, 38440 Wolfsburg (DE)
(72) Erfinder: STRASDAT, Björn, 38104 Braunschweig (DE); HOROVITZ, Silvan, 38102 Braunschweig (DE); TO, Thanh-Binh, 38104 Braunschweig (DE)
(86) Internationale Anmeldenummer: PCT/EP2017/065983
(87) Internationale Veröffentlichungsnummer: WO 2018/033283

(56) Entgegenhaltungen:
- WO-A1-2006/088434
- WO-A1-2016/005012
- DE-A1- 10 021 905
- JP-A- S5 826 656

## Beschreibung

Die Erfindung betrifft ein Verfahren und eine Vorrichtung zum Reinigen eines Innenraums eines Kraftfahrzeugs, das insbesondere als autonom fahrendes beziehungsweise fahrbares Kraftfahrzeug ausgebildet ist.

Aus dem Stand der Technik sind bereits eine Vielzahl von Verfahren und Vorrichtungen zum Reinigen des Innenraums eines Kraftfahrzeugs bekannt. So offenbart beispielsweise die Offenlegungsschrift DE 100 21 905 A1 eine Vorrichtung zur Reinigung eines Kraftfahrzeuginnenraums mit einer fest installierten Saugeinheit, die ein Sauggebläse, eine bewegbare Saugleitung und einen mit dieser verbundenen Saugkopf umfasst. Die Saugeinheit ist im Bereich eines Fahrzeugbodens angeordnet und der Saugkopf in etwa parallel zum Fahrzeugboden durch die Saugleitung geführt. Dabei kann ein Saugvorgang auch automatisch ohne Zutun eines Fahrzeugführers zeitabhängig durchgeführt werden, nachdem der Fahrzeugführer das Kraftfahrzeug verlassen hat. Dabei wird der Saugvorgang dann ausgelöst, wenn der Fahrer beispielsweise die Tür verriegelt und ein Sitzerkennungssystem eine Belegung der Fahrzeugsitze ausschließt. Nachdem dies festgestellt wurde, wird nach Ablauf einer vorgebbaren Zeitdauer der Reinigungsvorgang durchgeführt. Durch das vorbekannte Verfahren wird somit ein automatischer Reinigungsvorgang des Kraftfahrzeugs beziehungsweise des Fahrzeugbodens durchgeführt. Dies hat zur Folge, dass eine Reinigung immer dann erfolgt, wenn das Kraftfahrzeug verlassen wird, und damit auch dann, wenn eine Verschmutzung des Fahrzeugbodens gar nicht oder nur geringfügig stattgefunden hat. Dies führt zu einem erhöhten Verschleiß der Reinigungsvorrichtung und auch des Fahrzeugbodens sowie zu einem erhöhten Energieverbrauch.

Weiteren einschlägigen Stand der Technik zeigen die Druckschriften JP S 58 26656 A, WO 2016/005012 A1 und WO 2006/088434 A1.

Der Erfindung liegt die Aufgabe zugrunde, ein Verfahren und eine Vorrichtung zu schaffen, welche den Verschleiß von für die Durchführung der Reinigung benötigten Komponenten vermindert und eine wirtschaftliche Reinigung des Fahrzeuginnenraums, insbesondere des Fahrzeugbodens, gewährleistet.

Die der Erfindung zugrundeliegende Aufgabe wird durch ein Verfahren mit den Merkmalen des Anspruchs 1 gelöst. Dies hat den Vorteil, dass auf kostengünstige und verschleißarme Art und Weise die Reinigung des Innenraums des Kraftfahrzeugs, insbesondere eines autonom fahrbaren/betreibbaren Kraftfahrzeugs, nur dann durchgeführt wird, wenn sie tatsächlich notwendig ist. Erfindungsgemäß wird dies dadurch erreicht, dass zunächst zumindest ein Bodenbereich des Innenraums mittels zumindest einer Kameraeinrichtung, die insbesondere fest im Kraftfahrzeug, beispielsweise am Dachhimmel, installiert ist, erfasst wird. Anschließend wird ein Verschmutzungsgrad des erfassten Bodenbereichs durch eine Auswertung des von der Kameraeinrichtung erfassten Bildes des Bodenbereichs ermittelt. Der Verschmutzungsgrad wird mit einem vorgebbaren Grenzwert verglichen. Überschreitet der ermittelte Verschmutzungsgrad den vorgebbaren Grenzwert, so wird eine Reinigung zumindest des erfassten Bodenbereichs durchgeführt. Dies hat zur Folge, dass dann, wenn der Fahrzeugboden beziehungsweise der erfasste Bodenbereich nicht oder nur wenig verschmutzt wurde, eine Reinigung des Fahrzeugbodens unterbleibt. Dadurch wird ein unnötiger Reinigungsvorgang vermieden und der Verschleiß und ein Energieaufwand insgesamt verringert. Insbesondere bei der zunehmenden Elektrifizierung von Kraftfahrzeugen wird dadurch auch eine Belastung eines elektrischen Energiespeichers des Kraftfahrzeugs verringert.

Gemäß einer bevorzugten Weiterbildung der Erfindung ist vorgesehen, dass der Verschmutzungsgrad nach der durchgeführten Reinigung erneut ermittelt und mit dem vorgebbaren ersten Grenzwert oder einem zweiten, niedrigeren vorgebbaren Grenzwert verglichen wird, wobei die Reinigung erneut durchgeführt wird, wenn der Verschmutzungsgrad den ersten beziehungsweise den zweiten Grenzwert überschreitet. Es ist somit vorgesehen, dass nach durchgeführter Reinigung diese auf den Erfolg der Reinigung geprüft wird. Hat die einmalige Reinigung des Fahrzeugbodens beziehungsweise des Bodenbereichs nicht ausgereicht, so wird diese automatisiert noch einmal durchgeführt. Dadurch wird sicher gewährleistet, dass auch bei größeren Verschmutzungen der Fahrzeuginnenraum beziehungsweise der Fahrzeugboden sicher gereinigt wird, sodass der nächste Fahrzeugführer oder Fahrzeuginsasse anschließend einen hinreichend sauberen Fahrzeugboden oder Fahrzeuginnenraum auffindet. Das Verfahren ist insbesondere dann von Vorteil, wenn es in einem autonom betreibbaren/fahrbaren beziehungsweise autonom fahrenden Kraftfahrzeug durchgeführt wird, bei welchem unterschiedliche Personen als Fahrzeugführer oder Passagier auftreten können. Insbesondere bei Kraftfahrzeugen, welche einem Fahrzeugdienst angehören, der seine autonom fahrenden beziehungsweise fahrbaren Kraftfahrzeuge verleiht beziehungsweise vermietet (zum Beispiel bei sogenanntem Car Sharing), ist das Verfahren von erhöhtem Vorteil, weil der folgende Mieter stets einen gesäuberten Innenraum vorfindet.

Weiterhin ist bevorzugt vorgesehen, dass dann, wenn der Verschmutzungsgrad den ersten und/oder zweiten Grenzwert überschreitet, eine Mitteilung an eine zentrale Einrichtung über den Verschmutzungsgrad und/oder die durchgeführte Reinigung gesendet wird. Hierdurch wird insbesondere der Eigentümer des Kraftfahrzeugs oder ein Flotteninhaber oder -betreiber, der eine Vielzahl derartiger Kraftfahrzeuge aufweist, über den Verschmutzungsgrad und/oder die durchgeführte(n) Reinigung(en) informiert. Insbesondere dann, wenn eine Reinigung nicht erfolgreich war, und der erfasste Verschmutzungsgrad trotz durchgeführter Reinigung den ersten und/oder zweiten Grenzwert nicht unterschreitet, wird der Zentrale eine Mitteilung darüber zugesandt, sodass das Kraftfahrzeug beispielsweise aus dem Betrieb herausgenommen und einer gesonderten Reinigung zugeführt werden kann.

Weiterhin ist bevorzugt vorgesehen, dass der Verschmutzungsgrad durch einen Vergleich des aktuell erfassten Bildes der Kameraeinrichtung mit einem Referenzbild ermittelt wird. Hierdurch ist per Bildauswertung eine besonders einfache Beurteilung beziehungsweise Ermittlung des aktuellen Verschmutzungsgrads des Fahrzeugbodens oder zumindest des erfassten Bodenbereichs möglich, die kostengünstig und in kurzer Zeit durchführbar ist. Als Referenzbild wird dabei bevorzugt ein Bild der Kameraeinrichtung verwendet, welches vor der ersten Benutzung des Kraftfahrzeugs aufgenommen wurde. Die Kameraeinrichtung kann dazu ausgebildet sein, ein zweidimensionales oder ein dreidimensionales Kamerabild aufzunehmen. Wird ein dreidimensionales Bild erfasst, ist es außerdem bevorzugt vorgesehen, das Volumen von detektierten Gegenständen auf dem Bodenbereich zu ermitteln, und in Abhängigkeit von dem erfassten Volumen über die durchzuführende Reinigungsmaßnahme zu entscheiden. So kann beispielsweise bei einem größeren Volumen entschieden werden, eine Nassreinigung durchzuführen, während bei einem kleineren Volumen eine Trockenreinigung, insbesondere ein Saugvorgang, ausreicht.

Gemäß einer bevorzugten Weiterbildung der Erfindung ist vorgesehen, dass zur Durchführung der Reinigung der Boden gesaugt, gewischt, gebürstet und/oder mit Druckluft oder Druckflüssigkeit beaufschlagt wird. Hierdurch ist eine verschleißarme und zuverlässige Reinigung des Fahrzeugbodens, insbesondere des Bodenbereichs, gewährleistet. Insbesondere wird die Art der Reinigung in Abhängigkeit von dem erfassten Verschmutzungsgrad und/oder von einer erfassten Verschmutzungsart durchgeführt, sodass ein verbessertes Reinigungsergebnis erzielt werden kann.

Die erfindungsgemäße Vorrichtung mit den Merkmalen des Anspruchs 7 zeichnet sich durch ein speziell hergerichtetes Steuergerät aus, das bei bestimmungsgemäßem Gebrauch das Verfahren nach einem der Ansprüche 1 bis 6 durchführt. Es ergeben sich hierdurch die bereits genannten Vorteile. Insbesondere weist die Vorrichtung die Kameraeinrichtung zum Erfassen des Bodenbereichs sowie eine Auswerteeinrichtung zum Ermitteln des Verschmutzungsgrads auf. Außerdem weist die Vorrichtung bevorzugt eine Sendeeinrichtung auf, mittels welcher die zuvor genannte Mitteilung über den Verschmutzungsgrad und/oder die durchgeführte Reinigung bei Bedarf an die zentrale Einrichtung gesendet werden kann. Weitere Vorteile und bevorzugte Merkmale und Merkmalskombinationen ergeben sich insbesondere aus dem zuvor und nachfolgend Beschriebenen sowie aus den Ansprüchen.

Das erfindungsgemäße Kraftfahrzeug mit den Merkmalen des Anspruchs 1 zeichnet sich durch die erfindungsgemäße Vorrichtung aus. Es ergeben sich dadurch die bereits genannten Vorteile. Weitere Vorteile und bevorzugte Merkmale und Merkmalskombinationen ergeben sich insbesondere aus dem zuvor und nachfolgend Beschriebenen sowie aus den Ansprüchen.

Im Folgenden soll die Erfindung anhand der Zeichnung näher erörtert werden. Dazu zeigen
- Figur 1: ein Kraftfahrzeug gemäß einem ersten Ausführungsbeispiel,
- Figur 2: ein Kraftfahrzeug gemäß einem zweiten Ausführungsbeispiel,
- Figur 3: ein Kraftfahrzeug gemäß einem dritten Ausführungsbeispiel und
- Figur 4: ein Kraftfahrzeug gemäß einem vierten Ausführungsbeispiel, jeweils in einer vereinfachten perspektivischen Darstellung.

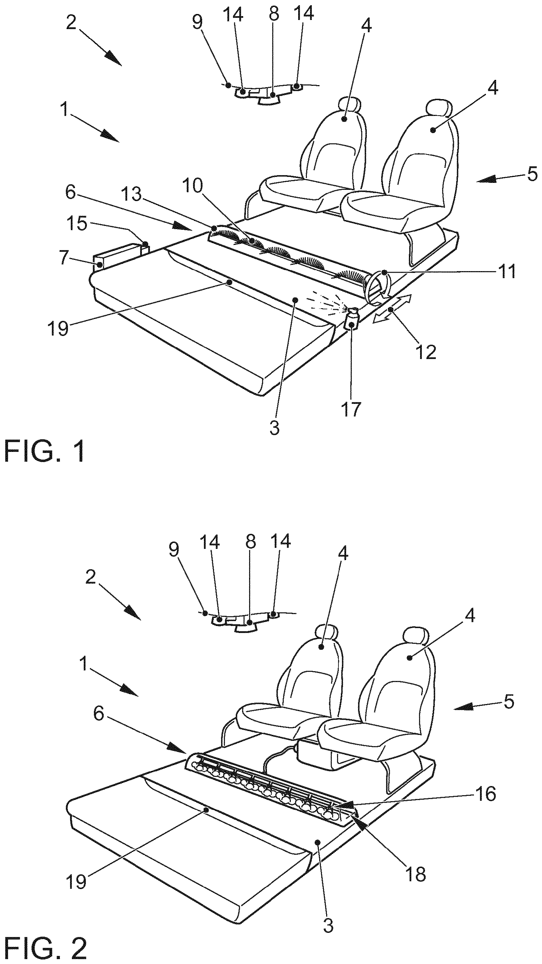

Figur 1 zeigt in einer vereinfachten perspektivischen Darstellung einen Innenraum 1 eines hier nur angedeuteten Kraftfahrzeugs 2. Der Innenraum 1 weist einen Fahrzeugboden 3 auf, auf welchem mehrere Fahrzeugsitze 4 angeordnet sind. Gemäß dem vorliegenden Ausführungsbeispiel sind nur zwei Fahrzeugsitze 4 einer hinteren Sitzreihe 5 dargestellt. Selbstverständlich können auf dem Fahrzeugboden 3 auch noch weitere Fahrzeugsitze 4 und/oder Sitzreihen 5 angeordnet sein.

Weiterhin ist auf dem Boden 3 eine Reinigungseinrichtung 6 angeordnet, die durch ein Steuergerät 7 betrieben wird. Das Steuergerät 7 ist außerdem mit einer Kameraeinrichtung 8 verbunden, die an einem Dachhimmel 9 des Kraftfahrzeugs 2 angeordnet und dem Fahrzeugboden 3 zugewandt ist, sodass sie zumindest einen Bodenbereich des Fahrzeugbodens 3 bildtechnisch erfasst.

Gemäß dem vorliegenden Ausführungsbeispiel weist die Reinigungsvorrichtung 6 eine Bürste auf, die sich über die Breite des Fahrzeugbodens 3 erstreckt und um ihre Längsachse drehbar gelagert ist, wie durch einen Pfeil 11 gezeigt. Außerdem ist die Bürste in der normalen Fahrtrichtung des Fahrzeugs 2 beziehungsweise entgegen der normalen Fahrtrichtung des Fahrzeugs 2, also letztendlich in Längserstreckung des Fahrzeugbodens 3, translatorisch verlagerbar, wie durch einen Doppelpfeil 12 gezeigt. Die Bürste ist in einem Gehäuse 13 angeordnet, welches die Bürste 10 derart überdeckt, dass die Bürste einerseits mit dem Fahrzeugboden 3 in Kontakt steht, und andererseits nach oben hin durch das Gehäuse 3 überdeckt ist, sodass von der Bürste aufgewirbelter Staub oder Schmutz nicht in den Fahrzeuginnenraum 1 hineingeschleudert wird. Die Reinigungsvorrichtung 6 ist derart ausgebildet, dass sie vollständig unter die Sitzreihe 5 verschiebbar ist, sodass sie bei Nichtgebrauch nicht in Erscheinung tritt.

Das Steuergerät 7 überwacht mittels der Kameraeinrichtung 8 den Verschmutzungsgrad des Fahrzeugbodens 3. Dazu wird ein von der Kameraeinrichtung 8 aktuell erfasstes Bild des Bodenbereichs beziehungsweise des Fahrzeugbodens 3 ausgewertet, insbesondere indem es mit einem Referenzbild verglichen wird. Das Referenzbild wurde beispielsweise vor Inbetriebnahme des Kraftfahrzeugs aufgenommen, wenn noch keine Verschmutzung stattgefunden hat.

Für die Bestimmung des Verschmutzungsgrads wird das aktuelle Bild mit dem Referenzbild verglichen. Dadurch können Unterschiede, beispielsweise Verfärbungen oder Konturen, in dem aktuellen Bild erkannt und als Verschmutzung bestimmt werden. Auch wird beispielsweise ein Verfärbungsgrad des Bodenbereichs insgesamt ermittelt, der beispielsweise auf eine erhöhte Staubbelastung oder dergleichen hindeutet. Um zu vermeiden, dass das Ergebnis durch Sonneneinstrahlung und Schattenwurf verfälscht wird, ist bevorzugt vorgesehen, dass der Kameraeinrichtung 8 wenigstens ein, vorliegend mehrere Leuchtmittel 14 zum Ausleuchten des zu erfassenden Bodenbereichs zugeordnet sind und zur Erfassung des Bildes aktiviert werden.

Wird bei dem Vergleich des aktuellen Bildes mit dem Referenzbild erkannt, dass der Verschmutzungsgrad einen vorgebbaren ersten Grenzwert überschreitet, so wird die Reinigungsvorrichtung 6 dazu angesteuert, eine Reinigung des Fahrzeugbodens 3 durchzuführen. Dazu wird die Bürste 10 in eine Rotationsbewegung versetzt, gemäß Pfeil 11, und gemäß dem Doppelpfeil 12 über den Fahrzeugboden 3 bewegt, sodass dieser zumindest einmal durch die Bürste 10 gereinigt wird. Die Bürste 10 kann alternativ auch feststehend ausgebildet sein und lediglich gemäß Doppelpfeil 12 über den Fahrzeugboden 3 bewegt werden.

Anschließend wird erneut ein Bild des Bodenbereichs durch die Kameraeinrichtung 8 erfasst und mit dem Referenzbild verglichen. Überschreitet der daraus ermittelte Verschmutzungsgrad auch weiterhin den ersten Grenzwert, oder einen zweiten, zu dem ersten Grenzwert niedrigeren Grenzwert, so wird die Reinigungsvorrichtung 6 erneut angesteuert, um den Fahrzeugboden 3 zu reinigen. Erst dann, wenn die Reinigung erfolgreich ist und der Verschmutzungsgrad unterhalb des ersten beziehungsweise des zweiten Grenzwerts liegt, wird darauf erkannt, dass der Fahrzeugboden 3 ausreichend sauber/gereinigt ist.

Wird bei der Bestimmung des Verschmutzungsgrads erkannt, dass trotz Reinigung des Fahrzeugbodens 3 die Verschmutzung nicht oder nicht hinreichend geringer wurde, sendet das Steuergerät 7 mittels einer Sendeeinrichtung 15 bevorzugt eine Mitteilung über die erfolglose oder nicht ausreichende Reinigung mitsamt einer Kennung des Kraftfahrzeugs 2 an eine zentrale Einrichtung, beispielsweise eines Eigentümers oder Betreibers des Kraftfahrzeugs oder der Kraftfahrzeugflotte. Damit wird die zentrale Einrichtung darüber informiert, dass ein bestimmtes Kraftfahrzeug trotz durchgeführter Reinigung einen erhöhten Verschmutzungsgrad aufweist. Somit kann dieses Kraftfahrzeug aus der Flotte beispielsweise entfernt und einer gesonderten Reinigung zugeführt werden.

Auch ist es denkbar, nach jeder durchgeführten Reinigung eine entsprechende Mitteilung mittels der Sendeeinrichtung 15 an die Zentrale zu senden, sodass diese beispielsweise über den Benutzungszustand und den Verschleiß der Reinigungsvorrichtung 6 informiert wird. Die Sendeeinrichtung 15 ist dazu insbesondere als Mobilfunksender ausgebildet.

Figur 2 zeigt ein zweites Ausführungsbeispiel eines Kraftfahrzeugs 1, wobei aus Figur 1 bereits bekannte Elemente mit den gleichen Bezugszeichen versehen sind. Im Folgenden soll im Wesentlichen auf die Unterschiede eingegangen werden.

Im Unterschied zu dem vorhergehenden Ausführungsbeispiel ist hierbei vorgesehen, dass die Reinigungsvorrichtung 6 anstelle der Bürste 10 einen Hochdruckreiniger 16 aufweist, welcher den Fahrzeugboden 3 mittels einer Flüssigkeit nass reinigt, die unter Hochdruck, also als Druckflüssigkeit, auf den Fahrzeugboden 3 aufgebracht wird, sodass auch stärkere Verschmutzungen gelöst werden können.

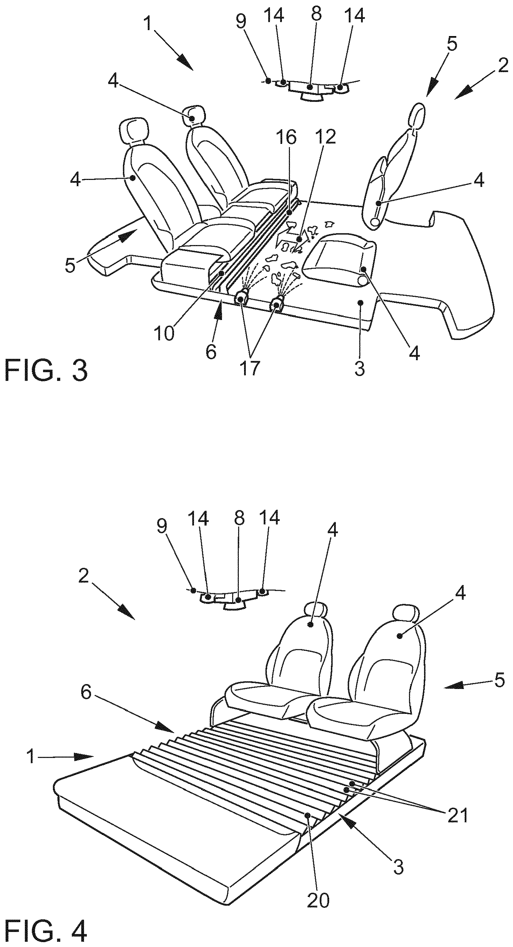

Figur 3 zeigt ein drittes Ausführungsbeispiel eines Kraftfahrzeugs 2, wobei auch hier aus den vorhergehenden Ausführungsbeispielen bereits bekannte Elemente mit den gleichen Bezugszeichen versehen sind. Es wird insofern auf die vorherstehende Beschreibung verwiesen. Im Folgenden soll im Wesentlichen auf die Unterschiede eingegangen werden.

Das dritte Ausführungsbeispiel unterscheidet sich von den vorhergehenden Ausführungsbeispielen darin, dass es eine Kombination dieser darstellt. Dazu weist die Reinigungsvorrichtung 6 sowohl eine verschiebbare Bürste 10 als auch einen Hochdruckreiniger 16 auf. Die Bürste 10 und der Hochdruckreiniger 6 sind grundsätzlich wie zuvor beschrieben ausgebildet und weisen entsprechend jeweils ein eigenes Gehäuse 13 auf. Zum Durchführen einer Reinigung wird zunächst der Hochdruckreiniger 16 über den Fahrzeugboden 3 bewegt und anschließend die Bürste 10 hinter gefahren, um beispielsweise aufgeweichte und gelockerte, aber noch nicht entfernte Verschmutzungen von dem Fahrzeugboden 3 zu entfernen.

Um die Reinigung zu unterstützen, ist dabei optional vorgesehen, dass in dem Fahrzeugboden 3 eine oder mehrere Spritzdüsen 17 angeordnet sind, welche vom Seitenrand des Fahrzeugbodens 3 aus auf den Fahrzeugboden 3 eine Wischflüssigkeit, insbesondere Reinigungsmittel, spritzen. Diese Spritzdüsen 17 können beispielsweise auch bei dem Ausführungsbeispiel gemäß Figur 1 bereits vorgesehen sein, um die Wirkung der Bürste 10 zu verbessern. Entsprechend ist eine der Spritzdüsen in Figur 1 beispielhaft eingezeichnet.

Die Spritzdüsen des Hochdruckreinigers 16 sind vorzugsweise linear oder senkrecht zur Verfahrrichtung angeordnet, um die Verschmutzung vom Fahrzeugboden 3 zu lösen. Anstelle der Anordnung der Spritzdüsen 17 am Seitenrand des Fahrzeugbodens 3, also feststehend, ist es auch möglich, eine oder mehrere Spritzdüsen 17 an dem jeweiligen Gehäuse 13 der Bürste 10 oder auch des Hochdruckreinigers 16 anzuordnen. Das Gehäuse 13 dient beim Hochdruckreiniger 16 insbesondere als Spritzschutz, der verhindert, dass beispielsweise die Fahrzeugsitze 4 durch beispielsweise Reinigungsmittel verschmutzt oder nass gemacht werden.

Während der Hochdruckreiniger 16 bisher als Hochdruckreiniger beschrieben wurde, welcher ein flüssiges Reinigungsmittel, beispielsweise Wasser, mit hohem Druck auf dem Fahrzeugboden 3 ausbringt, ist es auch denkbar, den Hochdruckreiniger 16 als Druckluftreiniger auszubilden, welcher mittels Druckluft den Fahrzeugboden 3 von Verschmutzungen reinigt.

Bevorzugt weist das Gehäuse 13 des Hochdruckreinigers 16 und/oder der Bürste 10 an einer Längsseite eine Wischlippe 18 auf, welche die gelösten Verschmutzungen mit der Reinigungseinrichtung 6 mitbewegt.

Bei den Ausführungsbeispielen der Fign. 1 und 2 ist am Fahrzeugboden 3 eine Schmutzfalle 19 angeordnet, zu welcher die Reinigungsvorrichtung 6 beziehungsweise die Bürste 10 und/oder der Hochdruckreiniger 16 hinbewegt werden können. Die Schmutzfalle 19 weist einen vom Fahrzeugboden 3 vorstehenden Schmutzfänger auf, welcher einem Schlitz im Fahrzeugboden 3 zugeordnet ist, sodass der von der Reinigungsvorrichtung 6 in Richtung der Schmutzfalle 19 transportierte Schmutz durch den Schlitz fällt. Unterhalb des Fahrzeugbodens 3 ist beispielsweise ein Auffangbehälter für den Schmutz vorgesehen, der automatisch oder manuell entleert werden kann.

Figur 4 zeigt ein weiteres Ausführungsbeispiel eines Kraftfahrzeugs 2, wobei aus den vorhergehenden Figuren bereits bekannte Elemente mit den gleichen Bezugszeichen versehen sind. Im Folgenden soll im Wesentlichen auf die Unterschiede eingegangen werden.

Gemäß dem in Figur 4 gezeigten vierten Ausführungsbeispiel ist vorgesehen, dass die Reinigungsvorrichtung 6 in Form eines verstellbaren Lamellenbodens 20 ausgebildet ist. Der Lamellenboden 20 bildet den Fahrzeugboden 3 und ist aus einer Vielzahl von Lamellen 21 gebildet, die jeweils um ihre Längsachse verschwenkbar gelagert sind, sodass sie in einer Gebrauchsstellung eine durchgängige Bodenfläche bilden, und in einer Reinigungsstellung derart aufgestellt sind, dass sich zwischen den Lamellen 21 Freiräume ergeben. Durch das Aufstellen der Lamellen 21 wird auf diesen befindlicher Schmutz in Richtung der Freiräume befördert und dadurch automatisch und einfach vom Fahrzeugboden 3 entfernt. Auch hier ist unterhalb des Fahrzeugbodens 3 insbesondere ein Auffangbehälter angeordnet, der sich dann zweckmäßigerweise über die gesamte Breite und Länge des Lamellenbodens 20 erstreckt, und automatisch oder manuell entleerbar ist.

Gemäß einem weiteren Ausführungsbeispiel, hier nicht zeichnerisch dargestellt, ist es auch denkbar, einen Reinigungsroboter im Fahrzeuginnenraum 1 vorzusehen, welcher beispielsweise an einer Ladestation im Fahrzeuginnenraum 1 angeordnet ist und sich automatisiert über den Ladeboden 3 hinwegbewegt, um Verschmutzungen zu entfernen. Dabei kann die Führung des Reinigungsroboters durch die Kameraeinrichtung 8 erfolgen, welche den Reinigungsroboter gezielt zu Verschmutzungen auf dem Fahrzeugboden 3 leiten kann. Zweckmäßigerweise ist die Ladestation unter einem der Fahrzeugsitze 4 angeordnet, sodass der Reinigungsroboter bei Nichtgebrauch beziehungsweise während des Aufladens versteckt ist.

Weiterhin ist es denkbar, dass der Auffangbehälter unterhalb des Fahrzeugbodens 3 dazu ausgebildet ist, automatisiert seinen Inhalt in einen Großtank oder über einem Gullideckel oder auf eine Fahrbahn zu entladen.

Die Reinigungsvorrichtung 6 weist zweckmäßigerweise einen Tank zur Aufbewahrung des flüssigen Reinigungsmittels auf. Vorzugsweise ist dieser automatisch mit einer Reinigungsflüssigkeit befüllbar. Beispielsweise ist der Tank mit einem Wischwassertank des Kraftfahrzeugs 2 verbunden und kann dadurch bei Bedarf mit Wischwasser befüllt werden.

Die Kameraeinrichtung 8 weist bevorzugt nur eine Kamera auf, um eine zweidimensionale Erfassung des Fahrzeugbodens 3 beziehungsweise des Bodenbereichs zu ermöglichen. Alternativ ist es auch denkbar, dass die Kameraeinrichtung 8 mehrere Kameras aufweist, um eine dreidimensionale Erfassung des Fahrzeugbodens 3 und/oder die gesonderte Erfassung mehrerer Bereiche des Fahrzeugbodens 3 zu ermöglichen. Die jeweilige Kamera kann dazu ausgebildet sein, ein Bild im sichtbaren oder Nahinfrarotbereich zu erfassen. So können die Leuchtmittel 14 beispielsweise als Infrarotstrahler ausgebildet sein, sodass das Ausleuchten des Fahrzeugbodens 3 für einen Benutzer unerkannt bleibt.

Mittels der Kameraeinrichtung 3 können auch Aufnahmen von Passagieren des Kraftfahrzeugs 2 gemacht werden, die für verschiedene Zwecke nutzbar sind, wie beispielsweise die Besitzer von verlorenen/vergessenen Koffern oder Gegenständen zu identifizieren, vor gefährlichen Situationen zu warnen, oder um nachzuweisen, durch welche Person eine besondere Verschmutzung erfolgt ist.

Das Kraftfahrzeug 2 hat den Vorteil, dass es insbesondere bei einer Ausbildung als autonom fahrendes beziehungsweise fahrbares Fahrzeug sicherstellt, dass Kunden stets einen gereinigten Fahrzeuginnenraum 1 vorfinden. Weil Service-/Mietstationen in der Regel weit vom aktuellen Einsatzort des Kraftfahrzeugs 2 entfernt sind, ergeben sich lange Fahrzeiten, um das Kraftfahrzeug 2 zu einem externen Reinigungsort zu führen. In dieser Zeit verdient der Anbieter des Kraftfahrzeugs 2 kein Geld, wenn er dieses beispielsweise als autonom fahrendes Taxi verwendet. Gleichzeitig sind Kunden in der Regel nicht bereit, das Kraftfahrzeug 2 selbst nach einer Nutzung zu reinigen, insbesondere wenn es sich um eine große zu reinigende Fläche handelt und die Nutzungszeit im Verhältnis relativ gering ist. Durch die beschriebenen vorteilhaften Ausgestaltungen des Kraftfahrzeugs 2 wird erreicht, dass der Fahrzeugboden 3 automatisiert gereinigt werden kann, ohne dass das Kraftfahrzeug 2 zu einem externen Reinigungsort bewegt werden muss. Dadurch wird die Effizienz der Reinigung und der Nutzung des Kraftfahrzeugs 2 gesteigert.

### Bezugszeichenliste

- 1: Innenraum
- 2: Kraftfahrzeug
- 3: Fahrzeugboden
- 4: Fahrzeugsitz
- 5: Sitzreihe
- 6: Reinigungseinrichtung
- 7: Steuergerät
- 8: Kameraeinrichtung
- 9: Dachhimmel
- 10: Bürste
- 11: Pfeil
- 12: Doppelpfeil
- 13: Gehäuse
- 14: Leuchtmittel
- 15: Sendeeinrichtung
- 16: Hochdruckreiniger
- 17: Spritzdüse
- 18: Wischlippe
- 19: Schmutzfalle
- 20: Lamellenboden
- 21: Lamelle

## Patentansprüche

1. Verfahren zum Reinigen eines Innenraums (1) eines Kraftfahrzeugs (2), mit folgenden Schritten:
- Erfassen zumindest eines Bodenbereichs des Innenraums (1) mittels zumindest einer Kameraeinrichtung (8),
- Ermitteln eines Verschmutzungsgrads des Bodenbereichs durch Auswerten des von der Kameraeinrichtung (8) erfassten Bildes,
- Reinigen zumindest des Bodenbereichs, wenn der ermittelte Verschmutzungsgrad einen vorgebbaren ersten Grenzwert überschreitet.

2. Verfahren nach dem vorhergehenden Anspruch, **dadurch gekennzeichnet, dass** der Verschmutzungsgrad nach der durchgeführten Reinigung erneut ermittelt und mit dem ersten Grenzwert oder mit einem zweiten, niedrigeren Grenzwert verglichen wird.

3. Verfahren nach Anspruch 2, **dadurch gekennzeichnet, dass** die Reinigung erneut durchgeführt wird, wenn der nach der Reinigung erfasste Verschmutzungsgrad den ersten beziehungsweise den zweiten Grenzwert überschreitet.

4. Verfahren nach einem der vorhergehenden Ansprüche, **dadurch gekennzeichnet, dass** dann, wenn der Verschmutzungsgrad den ersten und/oder den zweiten Grenzwert überschreitet, eine Mitteilung an eine zentrale Einrichtung über den Verschmutzungsgrad und/oder die durchgeführte Reinigung gesendet wird.

5. Verfahren nach einem der vorhergehenden Ansprüche, **dadurch gekennzeichnet, dass** der Verschmutzungsgrad durch einen Vergleich eines aktuell erfassten Bildes der Kameraeinrichtung (8) mit einem Referenzbild ermittelt wird.

6. Verfahren nach einem der vorhergehenden Ansprüche, **dadurch gekennzeichnet, dass** zur Durchführung der Reinigung zumindest der Bodenbereich gesaugt, mit Druckluft und/oder Druckflüssigkeit beaufschlagt, gewischt und/oder gebürstet wird.

7. Vorrichtung zum Reinigen eines Innenraums (1) eines Kraftfahrzeugs (2), mit wenigstens einer ansteuerbaren Reinigungseinrichtung (6) und zumindest einer Kameraeinrichtung (8) zum Erfassen zumindest eines Bodenbereichs des Innenraums (1) des Kraftfahrzeugs (2), und mit einem Steuergerät (7), das speziell dazu hergerichtet ist, das Verfahren nach einem der vorhergehenden Ansprüche durchzuführen.

8. Kraftfahrzeug, mit einer Vorrichtung nach Anspruch 7.

## Claims

1. Method for cleaning an interior (1) of a motor vehicle (2), comprising the following steps:
- capturing at least one floor region of the interior (1) by means of at least one camera device (8),
- determining a degree of soiling of the floor region by evaluating the image captured by the camera device (8),
- cleaning at least the floor region if the determined degree of soiling exceeds a predefinable first limit value.

2. Method according to the preceding claim, **characterized in that** after the cleaning has been carried out, the degree of soiling is again determined and compared with the first limit value or with a second, lower limit value.

3. Method according to Claim 2, **characterized in that** the cleaning is carried out again if the degree of soiling detected after the cleaning exceeds the first or respectively the second limit value.

4. Method according to any of the preceding claims, **characterized in that** if the degree of soiling exceeds the first and/or the second limit value, a notification is sent to a central facility about the degree of soiling and/or the cleaning carried out.

5. Method according to any of the preceding claims, **characterized in that** the degree of soiling is determined by comparing a currently captured image from the camera device (8) with a reference image.

6. Method according to any of the preceding claims, **characterized in that**, in order to carry out the cleaning, at least the floor region is vacuumed, acted on by compressed air and/or pressurized liquid, wiped and/or brushed.

7. Apparatus for cleaning an interior (1) of a motor vehicle (2), comprising at least one controllable cleaning device (6) and at least one camera device (8) for capturing at least one floor region of the interior (1) of the motor vehicle (2), and comprising a control unit (7) adapted specifically to carry out the method according to any of the preceding claims.

8. Motor vehicle comprising an apparatus according to Claim 7.

## Revendications

1. Procédé pour nettoyer un habitacle (1) d'un véhicule automobile (2), comprenant les étapes consistant à :
- détecter au moins une zone du plancher de l'habitacle (1) au moyen d'au moins un dispositif de caméra (8),
- déterminer un degré de salissure de la zone de plancher par évaluation de l'image détectée par le dispositif de caméra (8),
- nettoyer au moins la zone de plancher, si le degré de salissure déterminé dépasse une première valeur limite prédéfinie.

2. Procédé selon la revendication précédente, **caractérisé en ce que** le degré de salissure est à nouveau déterminé après le nettoyage et comparé à la première valeur limite ou à une seconde valeur limite inférieure.

3. Procédé selon la revendication 2, **caractérisé en ce que** le nettoyage est effectué à nouveau si le degré de salissure détecté après le nettoyage dépasse la première ou la seconde valeur limite.

4. Procédé selon l'une des revendications précédentes, **caractérisé en ce que**, si le degré de salissure dépasse la première et/ou la seconde valeur limite, un message concernant le degré de salissure et/ou le nettoyage effectué est envoyé à un dispositif central.

5. Procédé selon l'une des revendications précédentes, **caractérisé en ce que** le degré de salissure est déterminé par comparaison d'une image actuellement détectée du dispositif de caméra (8) avec une image de référence.

6. Procédé selon l'une des revendications précédentes, **caractérisé en ce que**, pour effectuer le nettoyage, au moins la zone de plancher est aspirée, traitée par de l'air comprimé et/ou par un fluide sous pression, essuyée et/ou brossée.

7. Dispositif de nettoyage d'un habitacle (1) d'un véhicule automobile (2), comprenant au moins un dispositif de nettoyage (6) pouvant être commandé et au moins un dispositif de caméra (8) pour détecter au moins une zone de plancher de l'habitacle (1) du véhicule automobile (2), et comprenant un appareil de commande (7) qui est spécialement conçu pour mettre en œuvre le procédé selon l'une des revendications précédentes.

8. Véhicule automobile, comprenant un dispositif selon la revendication 7.
